# EUROPEAN PATENT APPLICATION

(11) **EP 2 527 873 A1**
(43) Date of publication of application: **28.11.2012**
(21) Application number: 10843947.2
(22) Date of filing: 24.11.2010
(51) Int. Cl.: G01S 19/34, G01C 21/00, G01S 19/25, G01S 19/42, H04M 1/00

(54) **MOBILE TERMINAL AND LOCATION POSITIONING METHOD**

(30) Priority: 22.01.2010 JP 2010012116
(71) Applicant: NTT DoCoMo, Inc., Tokyo 100-6150 (JP)
(72) Inventor: HASHIMOTO Jun, Tokyo 1006150 (JP); TAKAHASHI Makoto, Tokyo 1006150 (JP); ITAGAKI Kentaro, Tokyo 1006150 (JP)
(74) Representative: Beder, Jens
(86) International application number: PCT/JP2010/070892
(87) International publication number: WO 2011/089783

(57) **Abstract**

The present invention aims to provide a mobile terminal and a location measurement method that can reduce measurement loads on the terminal.

The GPS positioning unit 101 performs location measurement in predetermined cycles or in accordance with user instructions. In performing the measurement, the control unit 105 determines a movement state of the mobile terminal 100. The control unit 105, when determining that the mobile terminal 100 is in a stationary state and the mobile terminal 100 has not moved from a most recently measured location by referring to state information stored in the state information management table 106b, can cause the location information storage table 106a to store therein the most recently measured location stored in the location information storage table 106a as a current location of the mobile terminal 100.

## Description

### Technical Field

The present invention relates to a mobile terminal and a location measurement method for measuring a position with a GPS or the like.

### Background Art

In recent years, mobile terminals have been used that can measure locations of themselves by using global positioning systems (GPS). For example, Patent Literature 1 discloses a mobile phone incorporating a GPS module.

### Citation List

### Patent Literature

[Patent Literature 1] Japanese Patent Application Laid-Open Publication No. 2003-90872

### Summary of Invention

### Technical Problem

Generally, in a location measurement method using a GPS module, the GPS module is activated, acquires information from GPS satellites, and performs measurement, so that the GPS module consumes large amounts of electricity and also Time To First Fix (TTFF) of a few seconds to several tens of seconds becomes necessary.

Accordingly, when a mobile terminal of the GPS module periodically performs GPS positioning, its user does not recognize the GPS positioning itself, occasionally resulting in exerting influence on operability such as unexpected battery drain or slowing down of terminal performance when operating it.

In view of this, the present invention aims to provide a mobile terminal and a location measurement method that can reduce measurement loads on the terminal.

### Solution to Problem

To solve the above-mentioned problems, a mobile terminal capable of performing location measurement includes positioning means for measuring a location of the mobile terminal in predetermined cycles or in accordance with a user instruction; storage means for storing therein the location measured by the positioning means; determination means for determining a movement state of the mobile terminal before performing location measurement by the positioning means; and control means for, in performing measurement by the positioning means, when the mobile terminal is determined by the determination means to have not moved from a most recently measured location, without performing location measurement by the positioning means, causing the storage means to store therein the most recently measured location stored in the storage means as a current location of the mobile terminal.

In addition, a location measurement method of the present invention includes, in a measurement method of a mobile terminal capable of performing location measurement, a positioning step of measuring a location of the mobile terminal in predetermined cycles or in accordance with a user instruction; a storage step of storing the location measured at the positioning step in storage means; a determination step of determining a movement state of the mobile terminal before performing location measurement at the positioning step; and a control step of, in performing measurement at the positioning step, when the mobile terminal is determined at the determination step to have not moved from a most recently measured location, without performing location measurement at the positioning step, causing the storage means to store therein the most recently measured location stored in the storage means as a current location of the mobile terminal.

According to the present invention, in performing location measurement in predetermined cycles or in accordance with a user instruction, when a movement state of the mobile terminal is determined and the mobile terminal is determined to have not moved from a most recently measured location, the most recently measured location stored can be stored as a current location of the mobile terminal. Accordingly, when not moving, without newly performing measurement, current location information can be acquired, loads on a mobile terminal can be reduced, and power consumption can be reduced.

In addition, it is preferred that the mobile terminal of the present invention further includes assist data acquisition means for acquiring assist data for assisting location measurement from a base station constituting a mobile communication network, wherein in performing measurement by the positioning means, when the mobile terminal is determined by the determining means to be in a high-speed moving state at a speed equal to or higher than a predetermined speed, the control means causes the storage means to store therein an approximate location based on the assist data acquired by the assist data acquisition means as a current location of the mobile terminal.

According to the present invention, in performing measurement, when the mobile terminal is determined to be in the high-speed moving state at a speed equal to or higher than the predetermined speed, the approximate location based on the assist data can be stored as a current location of the mobile terminal. Accordingly, location information can be acquired without performing measurement with a GPS or the like, and processing loads on the mobile terminal can be reduced.

In addition, in the mobile terminal of the present invention, it is preferred that in performing measurement in the predetermined cycles by the positioning means, when the mobile terminal is determined to be in a low-speed moving state at a speed equal to or lower than the predetermined speed by the determining means, the control means causes the positioning means to perform location measurement.

According to the present invention, in performing measurement in the predetermined cycles, when the mobile terminal is determined to be in a low-speed moving state at a speed equal to or lower than the predetermined speed, location measurement can be performed, whereby accurate location information can be acquired.

In addition, the mobile terminal of the present invention, more specifically, further includes a state information management table that stores therein a movement state of the mobile terminal detected in the predetermined cycles in association with time of detection thereof, and a location information storage table that stores therein location information on the location measured by the positioning means in association with time of measurement thereof, wherein when a current state of the mobile terminal is a stationary state and the movement state stored in the state information management table after time when measurement was most recently performed by the positioning means indicates a stationary state, the control unit refers to the location information storage table and sets the most recently measured location as a current location. Accordingly, without performing a measurement process such as GPS positioning, the current location can be obtained, and reduction of processing loads on the mobile terminal and reduction of power consumption can be achieved.

### Advantageous Effects of Invention

According to the present invention, when a mobile terminal is not moving, without newly performing measurement, current location information can be acquired, loads on the mobile terminal can be reduced, and power consumption can be reduced.

### Brief Description of Drawings

[Fig. 1] Fig. 1 is a block diagram illustrating functions of a mobile terminal that performs location measurement using a GPS of a present embodiment.
[Fig. 2] Fig. 2 is a block diagram illustrating a hardware configuration of a mobile terminal 100.
[Fig. 3] Fig. 3 includes explanatory diagrams of a location information storage table 106a.
[Fig. 4] Fig. 4 is an explanatory diagram of a state information management table 106b.
[Fig. 5] Fig. 5 is a flowchart illustrating processes of a sensor control unit 103 provided to the mobile terminal 100.
[Fig. 6] Fig. 6 is a flowchart illustrating a determination process of a state determination unit 104.
[Fig. 7] Fig. 7 is a flowchart illustrating a process of performing location measurement using a movement state stored in the state information management table 106b.

### Description of Embodiments

Embodiments of the present invention will be described with reference to the attached drawings. When appropriate, like reference signs are given to like parts, and redundant explanations are omitted.

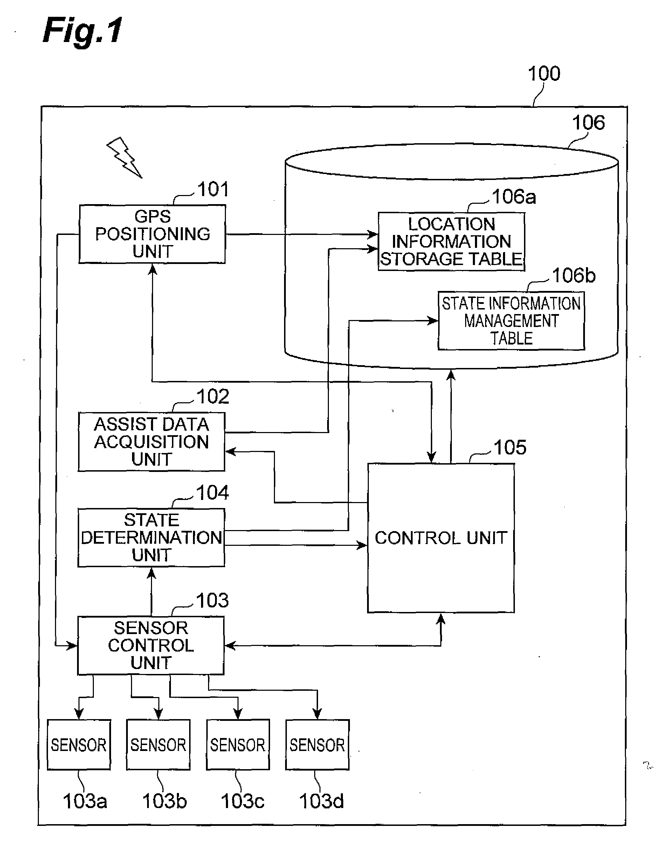

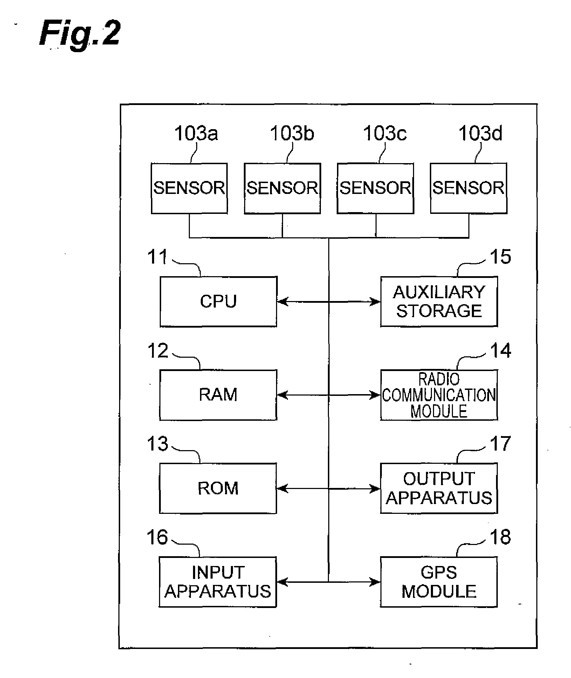

Fig. 1 is a block diagram illustrating functions of a mobile terminal that performs location measurement using a GPS of the present embodiment. As depicted in Fig. 1, this mobile terminal 100 is configured to include a GPS positioning unit 101 (positioning means), an assist data acquisition unit 102 (assist data acquisition means), a sensor control unit 103, various sensors 103a to 103d, a state determination unit 104 (determination means), a control unit 105 (control means), and a storage unit 106 (storage means, a state information management table, a location information management table). This mobile terminal is configured with hardware depicted in Fig. 2.

Fig. 2 is a block diagram illustrating a hardware configuration of the mobile terminal 100. The mobile terminal 100 depicted in Fig. 1 is physically configured as a computer system, as depicted in Fig. 2, including a CPU 11, a RAM 12 and a ROM 13 being main memories, an input apparatus 14 such as a keyboard or a mouse being an input device, an output apparatus 15 such as a display, a communication module 16 being a data transmitting and receiving apparatus such as a network card, an auxiliary storage 17 such as a hard disk drive, a GPS module 18, and sensors 103a to 103d. The respective functions explained in Fig. 1 are implemented by loading predetermined computer software into hardware such as the CPU 11 or the RAM 12 depicted in Fig. 2 to cause the input apparatus 14, the output apparatus 15, and the communication module 16 to operate under control of the CPU 11, and also to read and write data in the RAM 12 and the auxiliary storage 17. Hereinafter, based on functional blocks depicted in Fig. 2, each of the functional blocks will be described.

The GPS positioning unit 101 is a unit that measures a location of the mobile terminal 100 in accordance with instructions of a user or in predetermined cycles. Location information that the GPS positioning unit 101 has obtained by performing measurement is stored in association with time of the measurement in the storage unit 106 described later.

The assist data acquisition unit 102 is a unit that acquires, from base stations constituting a mobile communication network, assist data including approximate location information indicating approximate locations of the base stations.

The sensor control unit 103 is a unit that controls the various sensors 103a to 103d. More specifically, it is a unit that performs the control for the various sensors 103a to 103d to perform sensing processes in accordance with user instructions or in predetermined cycles, and also acquires sensing results. These various sensors 103a to 103d are, for example, an acceleration sensor, a geomagnetic sensor, an angular velocity sensor, an atmospheric pressure sensor, a 3G communication unit, a WLAN communication unit, a microphone, a camera, or the like. For example, the acceleration sensor is used for obtaining a moving velocity of a user carrying this mobile terminal 100, and the 3G communication unit and the WLAN communication unit are used for acquiring sector information to acquire the approximate location and obtain movement history of the user.

Using the sensor control unit 103 and the various sensors 103a to 103d, the mobile terminal 100 grasps a movement state of the user, and accordingly the sensing results and the sensing times are output to the state determination unit 104.

The state determination unit 104 is a unit that determines the movement state of the user (mobile terminal 100) on the basis of the sensing results obtained from the sensor control unit 103. This state determination unit 104 can determine whether the user is walking at low speed (moving at a speed equal to or lower than a predetermined speed) such as walking, whether the user is moving at high speed (moving at a speed equal to or higher than the predetermined speed) such as by car or by train, or whether the user is in a stationary state such as standing still. This determination result is stored in the state information management table 106b in the storage unit 106. For example, the state determination unit 104 can determine the presence or absence of movement on the basis of output results from the acceleration sensor and the moving velocity, and can cause the state information management table 106b to store therein the determination result in association with time of the sensing.

Note that as a method for detecting the stationary state, assuming that a sensor activated by detecting a motion is provided, other than a method in which the state determination unit 104 checks whether the sensor has been activated or not, another possible method is to manage the output results from the various sensors 103a to 103d together with the times in a table and determine the movement states of the sensors for a target period to determine the stationary state.

When the control unit 105 receives instructions of GPS positioning via an operation unit (not depicted) or when a predetermined time (predetermined cycle) to perform GPS positioning is reached, based on the state information stored in the state information management table 106b and the sensing results of the sensor control unit 103, the control unit 105 compares them with results of the previous measurement to determine whether the user has moved or not. More specifically, the control unit 105, when performing GPS positioning, causes the various sensors to perform sensor processes in the sensor control unit 103, acquires sensing results, and determines the presence or absence of movement of the mobile terminal 100 (user) on the basis of the results. Consequently, the control unit 105, when it can determine that the mobile terminal 100 is stationary, refers to the location information storage table 106a to extract most recent measurement time, and refers to the state information management table 106b to determine the movement state of the user after the measurement time.

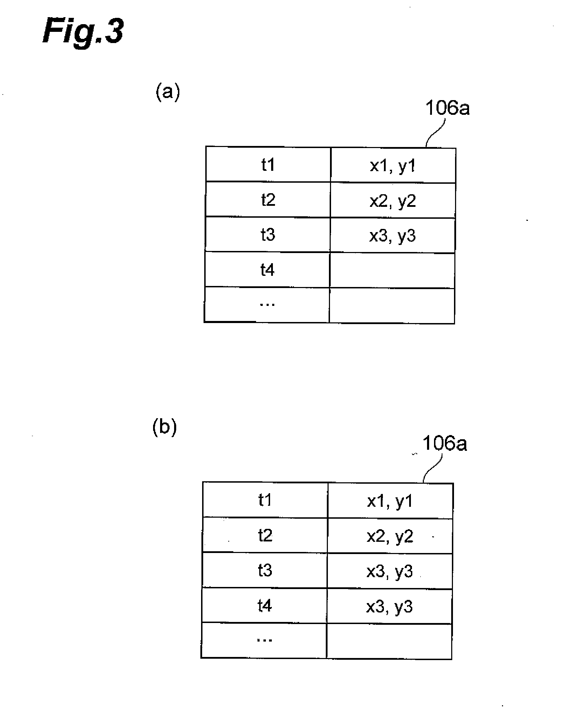

Consequently, the control unit 105, when states stored in the state information management table 106b are all stationary after the time when measurement was most recently performed and thus the control unit 105 determines that the user is not moving, causes the location information storage table 106a of the storage unit 106 to store therein location information on a location most recently measured. For example, in such a manner that the location information storage table 106a depicted in Fig. 3(a) is depicted in Fig. 3(b), location information x3, y3 at time t3 is stored as location information at time t4 without being processed.

In addition, the control unit 105, when it can determine that the user is currently stationary but moved after the time when measurement had most currently been performed, performs control so as to cause the GPS positioning unit 101 to perform GPS positioning. For example, the control unit 105, when determining that the user is currently stationary, and when high-speed movement or low-speed movement is included in states stored in the state information management table 106b after the time when measurement was most recently performed, determines that the user moved, and causes the GPS positioning unit 101 to newly perform GPS positioning.

In addition, the control unit 105, when determining that the user is moving based on the sensing results of the sensor control unit 103, further determines whether the user is moving at high speed or moving at low speed. Consequently, when determining that the user is moving at low speed, the control unit 105 causes the location information storage table 106a to store therein information on a location measured by the GPS positioning unit 101. In contrast, when determining that the user is moving at high speed, the control unit 105 causes the table to store therein as location information an approximate location included in assist data acquired by the assist data acquisition unit 102.

Note that the control unit 105, when causing the table to store therein as location information the approximate location included in the assist data, may use a navigation application used for a car navigation system, for example, to correct the location information and cause the table to store therein the location information thus corrected. For example, when the user is moving at high speed, the user can be assumed to be riding on a train or a car, and accordingly it is preferred to correct the location information such that the location of the user lies on a train route.

The storage unit 106 is a unit that stores the location information storage table 106a and the state information management table 106b. Fig. 3 includes explanatory diagrams of this location information storage table 106a. As depicted in Fig. 3(a), measurement times and coordinate information being location information are stored therein in association with each other. Herein, at the point of time t4, if the user is determined to be in a stationary state by the control unit 105 and also determined not to have moved since the time when measurement was most recently performed, by a process performed by the control unit 105, without a GPS positioning process being performed, location information at time t3 is stored as location information at time t4 without being processed in the location information storage table 106a.

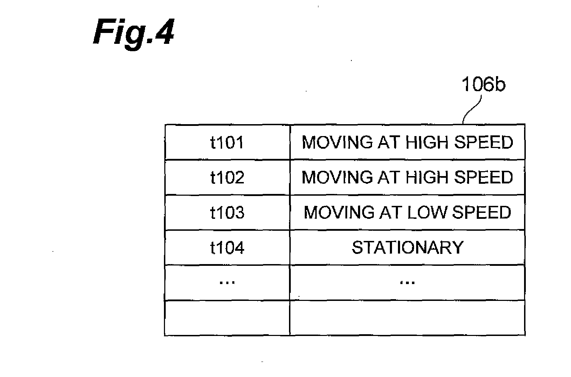

Fig. 4 is an explanatory diagram of the state information management table 106b. As depicted in Fig. 4, based on determination results by the state determination unit 104, sensing times thereof and state information of the user at the times are stored therein in association with each other. As depicted in Fig. 4, the table stores therein any one of a high-speed moving state, a low-speed moving state, and a stationary state as the state information and, for example, a piece of state information indicating that the user is moving at high speed at time t101 is stored therein in association with the time.

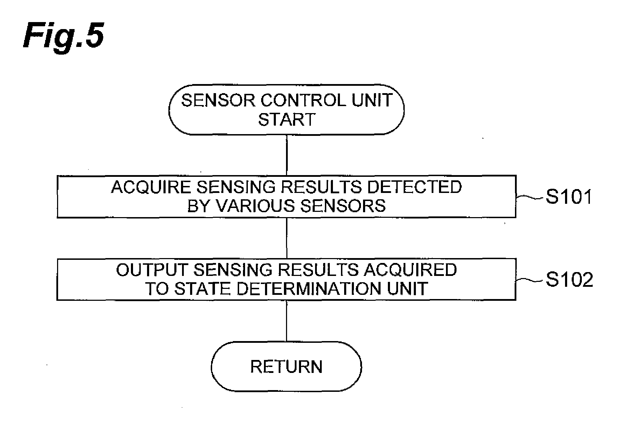

Subsequently, processes of the mobile terminal 100 configured in this manner will be described. Fig. 5 is a flowchart illustrating processes of the sensor control unit 103 provided to the mobile terminal 100. In accordance with control by the sensor control unit 103, the various sensors 103a to 103d perform sensing processes at regular intervals (e.g., every one minute). For example, the senor control unit 103 acquires sensing results such as acceleration information, a vibration waveform, and orientation information and sensing times thereof that the various sensors have acquired (S101). Then, by the sensor control unit 103, the sensing results thus acquired and the sensing times thereof are output to the state determination unit 104 (S102).

In this manner, the sensing results are periodically output to the state determination unit 104.

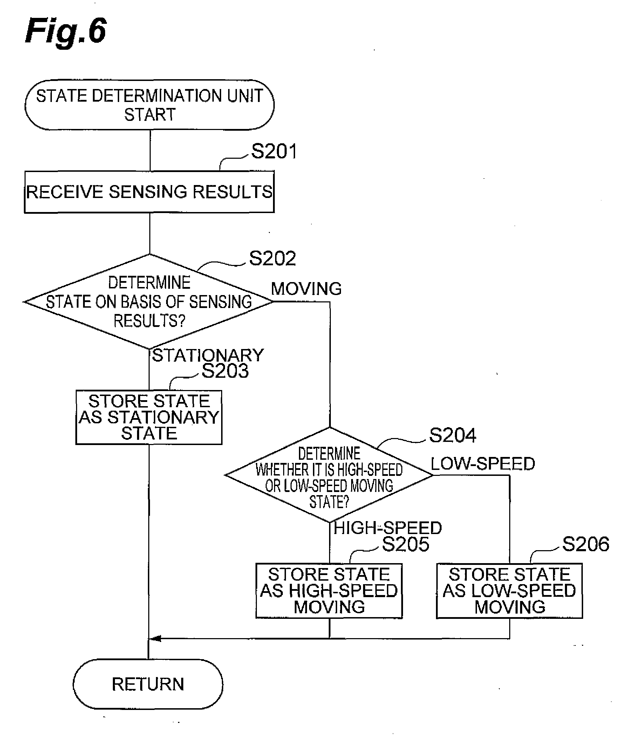

Subsequently, processes of this state determination unit 104 will be described. Fig. 6 is a flowchart illustrating a determination process of the state determination unit 104. In the state determination unit 104, the sensing results and the sensing times output from the sensor control unit 103 are received (S201). Then, based on the sensing results thus received, a movement state of the mobile terminal 100 is determined (S202). Herein, when the mobile terminal 100 is determined to be in a stationary state, this state is stored in the state information management table 106b together with sensing time (S203).

At S202, when the mobile terminal 100 is determined to be in a moving state, whether the moving state is a high-speed moving state or a low-speed moving state is determined (S204). Herein, when it is determined to be a high-speed moving state, this state is stored in the state information management table 106b in association with the sensing time (S205). In contrast, when it is determined to be a low-speed moving state, this state is stored in the state information management table 106b in association with the sensing time (S206).

In this manner, every time sensing results are received from the sensor control unit 103, a state of the mobile terminal 100 at each time is stored in the state information management table 106b.

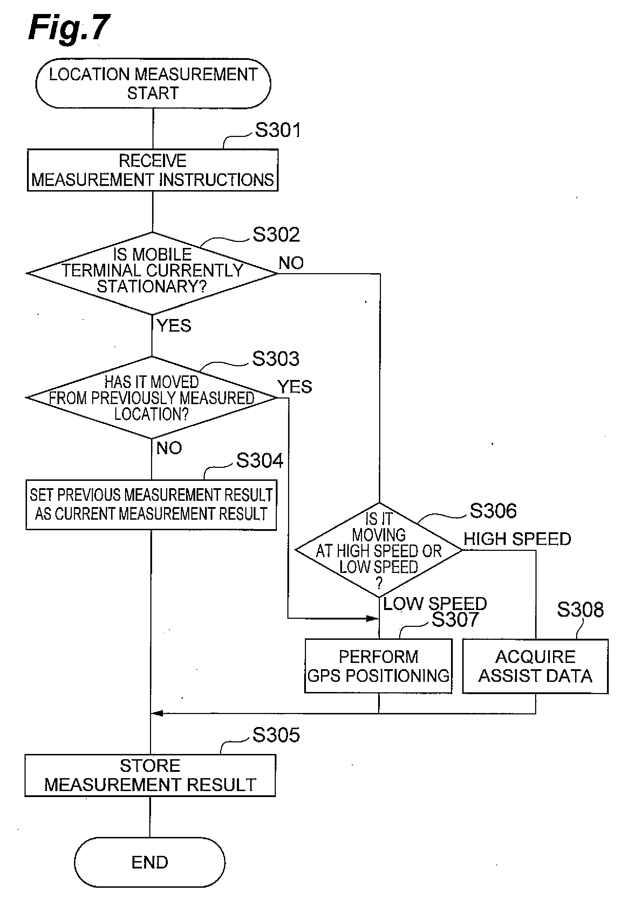

Subsequently, a process of performing location measurement using a movement state stored in this state information management table 106b will be described. Fig. 7 is a flowchart illustrating the process.

When instructions to perform GPS positioning are received from an operation unit (not depicted) by user operation (S301), based on the sensing results of the sensor control unit 103, a current movement state is determined by the control unit 105 (S302). Herein, when the mobile terminal 100 is determined to be stationary, the state information management table 106b is referred to by the control unit 105 and also whether the mobile terminal 100 has moved from the previously measured location or not is determined (S303). Note that at the above-described S301, reception of the user instructions is mentioned as an example, but when automatically performing GPS positioning in predetermined cycles, at the measurement timing, the process is performed such that the current movement state is determined.

When it is determined that there was no movement at S303, a measurement result previously measured is set as a current measurement result (S304), and the measurement result is stored together with time thereof in the location information storage table 106a (S305).

In contrast, when it is determined that there was movement at S303, GPS positioning by the GPS positioning unit 101 is performed (S307).

In addition, when it is determined that there is movement at S302 by the control unit 105, whether it is high-speed movement or low-speed movement is determined by the control unit 105 (S306). Herein, when it is determined to be low-speed movement, GPS positioning by the GPS positioning unit 101 is performed (S307). In contrast, when it is determined to be high-speed movement, assist data is acquired by the assist data acquisition unit 102, and an approximate location included in the assist data is acquired as a measurement result (S308). The measurement result thus acquired is stored together with the measurement time (or acquisition time) as location information in the location information storage table 106a (S305).

Subsequently, functions and effects of the mobile terminal 100 of the present embodiment will be described. In the mobile terminal 100 of the present embodiment, the GPS positioning unit 101 performs location measurement in predetermined cycles or in accordance with user instructions. In performing the measurement, the control unit 105 determines a movement state of the mobile terminal 100. The control unit 105, when determining that the mobile terminal 100 is in a stationary state and the mobile terminal 100 has not moved from a most recently measured location by referring to state information stored in the state information management table 106b, can cause the location information storage table 106a to store therein the most recently measured location stored in the location information storage table 106a as a current location of the mobile terminal 100. Accordingly, when the mobile terminal 100 is not moving, without newly performing measurement, the current location can be acquired, loads on the mobile terminal can be reduced, and the power consumption can be reduced.

As a result, the mobile terminal 100 of the present embodiment informs a service provider (i.e., telecommunications carrier) of location information acquired as described above, whereby the service provider can provide the user of the mobile terminal 100 with information suitable for the location by push delivery. For example, the service provider can provide an action support service of announcing weather information, event information in a city, the last train time information of the nearest station, and the like.

In addition, it is preferred that the mobile terminal 100, in performing measurement, when the control unit 105 determines that the mobile terminal 100 is in a high-speed moving state at a speed equal to or higher than the predetermined speed, causes the location information storage table 106a to store therein an approximate location based on assist data acquired by the assist data acquisition unit 102 as the current location of the mobile terminal 100. This makes it possible to acquire location information without performing measurement with a GPS or the like, thereby reducing processing loads on the mobile terminal.

In addition, it is preferred that the mobile terminal 100, for the GPS positioning unit 101 to perform measurement in predetermined cycles, when the mobile terminal 100 is determined to be in a low-speed moving state at a speed equal to or lower than the predetermined speed by the control unit 105, performs location measurement. This makes it possible to acquire accurate location information.

### Reference Signs List

100... mobile terminal, 101... positioning unit, 102... assist data acquisition unit, 103... sensor control unit, 103a... various sensors, 104... state determination unit, 105... control unit, 106... storage unit, 106a... location information storage table, 106b... state information management table

## Claims

1. A mobile terminal capable of performing location measurement, the mobile terminal comprising:
positioning means for measuring a location of the mobile terminal in predetermined cycles or in accordance with a user instruction;
storage means for storing therein the location measured by the positioning means;
determination means for determining a movement state of the mobile terminal before performing location measurement by the positioning means; and
control means for, in performing measurement by the positioning means, when the mobile terminal is determined by the determination means to have not moved from a most recently measured location, without performing location measurement by the positioning means, causing the storage means to store therein the most recently measured location stored in the storage means as a current location of the mobile terminal.

2. The mobile terminal according to Claim 1, further comprising:
assist data acquisition means for acquiring assist data for assisting location measurement from a base station constituting a mobile communication network, wherein
in performing measurement by the positioning means, when the mobile terminal is determined by the determining means to be in a high-speed moving state at a speed equal to or higher than a predetermined speed, the control means causes the storage means to store therein an approximate location based on the assist data acquired by the assist data acquisition means as a current location of the mobile terminal.

3. The mobile terminal according to Claim 1 or 2, wherein
in performing measurement in the predetermined cycles by the positioning means, when the mobile terminal is determined to be in a low-speed moving state at a speed equal to or lower than the predetermined speed by the determining means, the control means causes the positioning means to perform location measurement.

4. The mobile terminal according to any one of Claims 1 to 3, further comprising:
a state information management table that stores therein a movement state of the mobile terminal detected in the predetermined cycles in association with time of detection thereof; and
a location information storage table that stores therein location information on the location measured by the positioning means in association with time of measurement thereof, wherein
when a current state of the mobile terminal is a stationary state and the movement state stored in the state information management table after time when measurement was most recently performed by the positioning means indicates a stationary state, the control unit refers to the location information storage table and sets the most recently measured location as a current location.

5. A location measurement method of a mobile terminal capable of performing location measurement, the location measurement method comprising:
a positioning step of measuring a location of the mobile terminal in predetermined cycles or in accordance with a user instruction;
a storage step of storing the location measured at the positioning step in storage means;
a determination step of determining a movement state of the mobile terminal before performing location measurement at the positioning step; and
a control step of, in performing measurement at the positioning step, when the mobile terminal is determined at the determination step to have not moved from a most recently measured location, without performing location measurement at the positioning step, causing the storage means to store therein the most recently measured location stored in the storage means as a current location of the mobile terminal.
